# FASCICULE DE BREVET EUROPEEN

(11) **EP 2 130 712 B1**
(45) Date de publication et mention de la délivrance du brevet: **09.08.2017**
(21) Numéro de dépôt: 09162053.4
(22) Date de dépôt: 05.06.2009
(51) Int. Cl.: B60L 9/14, B60L 9/30

(54) **Alimentation électrique pour chaîne de traction de véhicule ferroviaire**
Stromversorgung für den Antriebsstrang eines Schienenfahrzeugs
Electric supply for the power train of a rail vehicle

(30) Priorité: 06.06.2008 FR 0853790
(43) Date de publication de la demande: 09.12.2009
(73) Titulaire: ALSTOM Transport Technologies, 93400 Saint-Ouen (FR); Speedlnnov, 75008 Paris (FR)
(72) Inventeur: Giacomoni, Olivier, 65290, JUILLAN (FR); Desportes, Guillaume, 65700, MAUBOURGUET (FR); Belin, Sébastien, 65800, AUREILHAN (FR); Cypers, David, 65310, ODOS (FR)
(74) Mandataire: Lavoix

(56) Documents cités:
- EP-A- 1 315 180
- DE-A1- 19 734 721
- FR-A- 2 881 266
- JP-A- 8 196 001

## Description

La présente invention concerne un procédé d'alimentation électrique pour chaîne de traction de véhicule ferroviaire, et plus particulièrement pour une telle chaîne de traction agencée pour fonctionner soit sous alimentation continue, soit sous alimentation alternative, ladite chaîne de traction comprenant un transformateur pour son fonctionnement sous alimentation alternative et un hacheur de freinage, ledit transformateur possédant au moins un enroulement secondaire, procédé comprenant la connexion, en fonctionnement sous alimentation continue, dudit enroulement secondaire comme self d'entrée de la chaîne de traction. EP1315180A décrit un transformateur et un circuit d'alimentation pour véhicule ferroviaire de traction à systèmes multiples. FR2881266A décrit un transformateur pour véhicule à moteur multicourant appelé transformateur de lissage. DE19734721A1 décrit un système d'entraînement à courant triphasé pour un moteur asynchrone dans un véhicule ferroviaire avec une self entre l'onduleur et le moteur asynchrone. JP8196001 A décrit un hacheur de freinage dans une chaîne de traction d'un autorail électrique. Les chaînes de traction de véhicules ferroviaires sont généralement prévues pour fonctionner soit sous alimentation continue, typiquement de 1,5 kV ou 3 kV, soit sous alimentation alternative de 25 kV, 50 Hz ou de 15 kV, 16^{2/3} Hz par exemple. Sous alimentation alternative, la chaîne de traction est alimentée par l'intermédiaire d'un transformateur doté généralement de plusieurs enroulements secondaires.

Sous alimentation continue, la chaîne de traction doit comporter une self d'entrée. Il est connu d'utiliser pour cette self d'entrée, un ou plusieurs des enroulements secondaires du transformateur, inutilisé dans cette configuration.

Cet agencement présente toutefois un inconvénient. En effet, une telle self d'entrée est très fortement non linéaire en conséquence de la non saturation du circuit magnétique du transformateur, tout particulièrement lorsqu'il s'agit d'un transformateur à colonne. Or, une telle self d'entrée non linéaire peut détériorer le fonctionnement des convertisseurs de traction. Cette difficulté est actuellement corrigée en saturant le circuit magnétique par l'adjonction d'un enroulement supplémentaire en court-circuit. Mais cette solution n'est elle-même pas totalement satisfaisante puisqu'elle ajoute des masses et des coûts au véhicule.

La présente invention vise à palier ces inconvénients.

Plus particulièrement, l'invention a pour but de fournir une chaîne de traction de véhicule ferroviaire qui ne présente pas de self d'entrée non linéaire, mais sensiblement sans ajouter de composants supplémentaires.

A cet effet, l'invention a tout d'abord pour objet un procédé d'alimentation électrique pour chaîne de traction de véhicule ferroviaire agencée pour fonctionner soit sous alimentation continue, soit sous alimentation alternative, ladite chaîne de traction comprenant un transformateur pour son fonctionnement sous alimentation alternative et un hacheur de freinage, ledit transformateur possédant au moins un enroulement secondaire, procédé comprenant la connexion, en fonctionnement sous alimentation continue, dudit enroulement secondaire comme self d'entrée de la chaîne de traction, caractérisé par le fait qu'il comprend la détermination du courant traversant ledit enroulement secondaire lorsqu'il est connecté comme self d'entrée de la chaîne de traction, et la commande du hacheur de freinage pour assurer dans ledit enroulement secondaire un courant minimum supérieur au courant de saturation de la self d'entrée.

L'invention a également pour objet une chaîne de traction de véhicule ferroviaire agencée pour fonctionner soit sous alimentation continue, soit sous alimentation alternative, ladite chaîne de traction comprenant un transformateur pour son fonctionnement sous alimentation alternative, un hacheur de freinage, et des moyens de commande pour ledit hacheur, ledit transformateur possédant au moins un enroulement secondaire susceptible d'être utilisé, en fonctionnement sous alimentation continue, comme self d'entrée de la chaîne de traction, ladite chaîne de freinage comprenant des moyens de détermination du courant traversant ledit enroulement secondaire lorsqu'il est connecté comme self d'entrée de la chaîne de traction, et lesdits moyens de commande du hacheur de freinage étant agencés pour assurer dans ledit enroulement secondaire un courant minimum supérieur au courant de saturation de la self d'entrée.

L'invention a également pour objet un véhicule ferroviaire, comprenant une chaîne de traction telle que décrite ci-dessus.

On décrira maintenant, à titre d'exemple non limitatif, un mode de réalisation particulier de l'invention, en référence aux dessins schématiques annexés dans lesquels :
- la figure 1 est un schéma du système d'alimentation électrique d'une chaîne de traction pour véhicule ferroviaire selon l'invention ; et
- la figure 2 illustre la variation de l'inductance d'un enroulement secondaire d'un transformateur à colonne en fonction du courant qui le traverse.

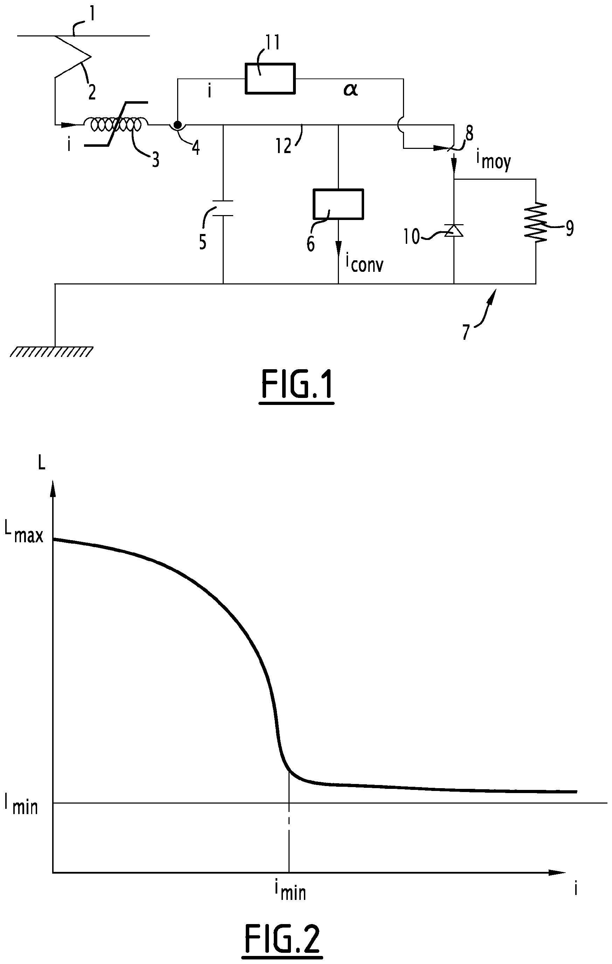

On voit à la figure 1 un système d'alimentation fonctionnant ici sous courant continu à partir d'une caténaire 1. Le courant est capté par un pantographe 2. Il traverse une self d'entrée 3 et est mesuré par un capteur de courant 4.

Des capacités d'entrée 5 sont ensuite disposées en parallèle avec les convertisseurs de traction et auxiliaire 6, et avec le rhéostat de freinage 7.

Le rhéostat de freinage (ou hacheur de freinage) 7 est réalisé de façon connue à l'aide d'un interrupteur électronique 8 en série avec une résistance 9, une diode 10 étant connectée en parallèle sur la résistance 9. L'interrupteur 8 est commandé par une électronique de commande 11 en fonction du courant mesuré *i.*

Le courant *i_{moy}* traversant le rhéostat 7 est modulé en largeur d'impulsion par l'interrupteur 8 de sorte que la résistance équivalente au rhéostat vue du bus continu 12 est égale à *R*/*α* où *R* est la valeur de la résistance 9 et *α* est le rapport cyclique.

La self 3 est ici constituée par un enroulement secondaire du transformateur d'entrée utilisé sous alimentation alternative, et donc ici non utilisé. La figure 2 montre la variation de l'inductance *L* de la self 2 en fonction du courant *i* qui la traverse. On constate que cette inductance varie d'une valeur élevée *Lₘₐₓ* pour un courant nul (typiquement quelque Henrys) à une valeur faible *Lₘᵢₙ* sensiblement constante (typiquement quelques dizaines de milli henrys) pour un courant supérieur à une valeur minimale *iₘᵢₙ.*

De telles variations étant dangereuses pour le convertisseur, on commande l'interrupteur 8 de manière que le courant *i* reste toujours supérieur à *iₘᵢₙ*. A cet effet, on déduit le courant *i_{conv}* dans le convertisseur du courant mesuré *i,* ce qui donne le courant moyen *i_{moy}* dans le rhéostat et donc *α.*

## Revendications

1. Procédé d'alimentation électrique pour chaîne de traction de véhicule ferroviaire agencée pour fonctionner soit sous alimentation continue, soit sous alimentation alternative, ladite chaîne de traction comprenant un transformateur pour son fonctionnement sous alimentation alternative et un hacheur de freinage (7), ledit transformateur possédant au moins un enroulement secondaire, procédé comprenant la connexion, en fonctionnement sous alimentation continue, dudit enroulement secondaire comme self d'entrée (3) de la chaîne de traction, **caractérisé par le fait qu'**il comprend la détermination du courant traversant ledit enroulement secondaire lorsqu'il est connecté comme self d'entrée de la chaîne de traction, et la commande du hacheur de freinage pour assurer dans ledit enroulement secondaire un courant minimum supérieur au courant de saturation de la self d'entrée.

2. Chaîne de traction de véhicule ferroviaire agencée pour fonctionner soit sous alimentation continue, soit sous alimentation alternative, ladite chaîne de traction comprenant un transformateur pour son fonctionnement sous alimentation alternative, un hacheur de freinage (7), et des moyens de commande (11) pour ledit hacheur, ledit transformateur possédant au moins un enroulement secondaire susceptible d'être utilisé, en fonctionnement sous alimentation continue, comme self d'entrée (3) de la chaîne de traction, **caractérisée par le fait qu'**elle comprend des moyens (4) de détermination du courant traversant ledit enroulement secondaire lorsqu'il est connecté comme self d'entrée de la chaîne de traction, et que lesdits moyens de commande du hacheur de freinage sont agencés pour assurer dans ledit enroulement secondaire un courant minimum supérieur au courant de saturation de la self d'entrée.

3. Véhicule ferroviaire, **caractérisé par le fait qu'**il comprend une chaîne de traction selon la revendication 2.

## Patentansprüche

1. Verfahren zur elektrischen Versorgung für einen Antriebsstrang eines Schienenfahrzeugs, der eingerichtet ist, sowohl mit Gleichversorgung als auch mit Wechselversorgung zu arbeiten, wobei der Antriebsstrang einen Transformator für seinen Betrieb bei Wechselversorgung und einen Brems-Chopper (7) umfasst, wobei der Transformator mindestens eine Sekundärwicklung besitzt, wobei das Verfahren beim Betrieb mit Gleichversorgung den Anschluss der Sekundärwicklung als Eingangsdrossel (3) des Antriebsstrangs umfasst, **gekennzeichnet durch** die Tatsache, dass es die Bestimmung des durch die Sekundärwicklung fließenden Stroms, wenn sie als Eingangsdrossel des Antriebsstrangs verbunden ist, und die Steuerung des Brems-Choppers, um in der Sekundärwicklung einen minimalen Strom größer als der Sättigungsstrom der Eingangsdrossel sicherzustellen, umfasst.

2. Antriebsstrang eines Schienenfahrzeugs, der eingerichtet ist, sowohl mit Gleichversorgung als auch mit Wechselversorgung zu arbeiten, wobei der Antriebsstrang einen Transformator für seinen Betrieb mit Wechselversorgung, einen Brems-Chopper (7) und Steuerungsmittel (11) für den Chopper aufweist, wobei der Transformator mindestens eine Sekundärwicklung besitzt, die geeignet ist, beim Betrieb mit Gleichversorgung als Eingangsdrossel (3) des Antriebsstrangs verwendet zu werden, **gekennzeichnet durch** die Tatsache, dass er Mittel (4) zur Bestimmung des Stroms umfasst, der die Sekundärwicklung durchströmt, wenn sie als Eingangsdrossel des Antriebsstrangs geschaltet ist, und dass die Mittel zur Steuerung des Brems-Choppers eingerichtet sind, in der Sekundärwicklung einen minimalen Strom größer als der Sättigungsstrom der Eingangsdrossel sicherzustellen.

3. Schienenfahrzeug, **gekennzeichnet durch** die Tatsache, dass es einen Antriebsstrang gemäß Anspruch 2 umfasst.

## Claims

1. Method of electric supply for the power train of a railway vehicle, arranged to operate either by direct current or alternating current, said power train comprising a transformer for operation with alternating current and a braking chopper (7), said transformer having at least one secondary winding, the method comprising the connection, in direct current operation, of said secondary winding as input choke (3) of the power train, **characterised by** the fact that it comprises the determination of the current passing through said secondary winding when it is connected as input choke of the power train, and control of the braking chopper to ensure a minimum current in said secondary winding that is greater than the saturation current of the input choke.

2. Power train of a rail vehicle, arranged to operate either by direct current or alternating current, said power train comprising a transformer for operation with alternating current, a braking chopper (7), and control means (11) for said chopper, said transformer having at least one secondary winding capable of being used, in direct current operation, as input choke (3) of the power train, **characterised by** the fact that it comprises means (4) of determining the current passing through said secondary winding when it is connected as input choke of the power train, and that said control means of the braking chopper are arranged to ensure a minimum current in said secondary winding that is greater than the saturation current of the input choke.

3. Railway vehicle, **characterised by** the fact that it comprises a power train according to claim 2.
